# EUROPÄISCHE PATENTSCHRIFT

(11) **EP 1 586 746 B1**
(45) Veröffentlichungstag und Bekanntmachung des Hinweises auf die Patenterteilung: **24.08.2011**
(21) Anmeldenummer: 05006696.8
(22) Anmeldetag: 26.03.2005
(51) Int. Cl.: F01L 1/24, F01L 1/245, F16K 15/04

(54) **Verfahren zum Einstellen des Kugelhubs eines Ventilspielausgleichselements**
method for adjusting the ball stroke in an hydraulic valve lash adjuster
Procédé de réglage de la course de la bille d'un élément de rattrapage hydraulique de jeu aux soupapes

(30) Priorität: 16.04.2004 DE 102004018386
(43) Veröffentlichungstag der Anmeldung: 19.10.2005
(73) Patentinhaber: Schaeffler Technologies GmbH & Co. KG, 91074 Herzogenaurach (DE)
(72) Erfinder: Sailer, Peter, 91052 Erlangen (DE); Schnell, Oliver, 90587 Veitsbronn (DE)

(56) Entgegenhaltungen:
- DE-A1- 4 131 032
- DE-A1- 19 630 443
- JP-A- 62 091 612
- JP-A- 2003 083 010
- US-A- 5 622 147
- US-A- 5 787 583

## Beschreibung

### Gebiet der Erfindung

Die Erfindung betrifft ein Verfahren zum Einstellen des Kugelhubs eines als Ventilkugel ausgebildeten Ventilschließkörpers eines Steuerventils eines hydraulischen Ventilspielausgleichselements.

### Hintergrund der Erfindung

Bekannte Ventilspielausgleichselemente, die als Standard-, Freeball- oder Reverse-Spring-Version ausgebildet sein können, besitzen unter anderem einen Kolben, mit einem Kolbenboden, der eine zentrale Bohrung aufweist, an deren außenliegendem Ende der Ventilsitz eines Steuerventils vorgesehen ist, der von einer Ventilkugel beherrscht ist, deren Kugelhub durch eine Ventilkappe begrenzt ist, die einen Kappenflansch und einen Kappenboden aufweist, wobei der Kappenflansch mit seiner Auflagefläche an einer Einsenkung des Kolbenbodens aufliegt und die Innenseite des Kappenbodens der Ventilkugel als Anschlagfläche dient.

Derartige Ventilspielausgleichselemente haben den Nachteil, dass durch prozessbedingte, nicht weiter einengbare Fertigungstoleranzen erhebliche Kugelhubstreuungen und, als Folge derselben, entsprechende Vorhubverluste der Ventilspielausgleichselemente auftreten. Diese wirken sich je nach Kugelhubtoleranzlage beim Kaltstart oder in der Hochtemperaturphase des Verbrennungsmotors unterschiedlich aus. Beim Kaltstart ist ein mittlerer bis großer Kugelhub erwünscht, in der Hochtemperaturphase ein kleiner bis mittlerer. Demnach ist ein eng tolerierter, mittlerer Kugelhub der Idealkompromiss.

Die U.S. 5,622,147 offenbart in Fig. 2 ein als Freeball-Version vorliegendes Spielausgleichselement in einem Abstützelement. Um den eingangs dargelegten Problemen zu begegnen, muss äußerst präzise und eng toleriert ausgelegt und gebaut werden und es ist eine aufwändige Führung für die Ventilkugel vorgesehen.

### Aufgabe der Erfindung

Es ist deshalb Aufgabe der Erfindung, ein Verfahren anzugeben, mit dem bei einem hydraulischen Ventilspielausgleichselement ein bestimmter, eng tolerierter Kugelhub mit geringem Bauaufwand aus vorhandenen Bauteilen einstellbar ist.

### Zusammenfassung der Erfindung

Die Aufgabe wird erfindungsgemäß durch die Merkmale des kennzeichnenden Teils des einzigen Verfahrensanspruchs gelöst.

Gemäß dem Verfahrensanspruch erfasst das Messen des Vorstehmaßes der Messkugel die Toleranzen der Einsenkung und des Ventilsitzes, während das Tiefeninnenmaß die Toleranzen der Ventilkappe berücksichtigt, bevor diese Bauteile zusammengefügt sind.

Die beiden Messwerte ermöglichen die Bestimmung eines rechnerischen Kugelhubs, dessen Abweichung vom gewünschten Kugelhub den erforderlichen Durchmesser der einzubauenden Ventilkugel ergibt. Auf diese Weise werden die zusammenpassenden Bauteile vor ihrer Montage bestimmt. Dadurch erübrigt sich eine nachträgliche Kontrolle des Kugelhubs im montierten Zustand.

### Kurze Beschreibung der Zeichnung

Weitere Merkmale der Erfindung ergeben sich aus der Beschreibung und der Zeichnung. Dabei zeigen:
- Figur 1: einen Längsschnitt durch eine Standard-Version eines hyd- raulischen Ventilspielausgleichselements mit einem Kol- ben, an dessen Kolbenboden ein Steuerventil angeordnet ist und mit einem Tiefenmaß einer Ventilkappe, einem Vor- stehmaß einer Messkugel und mit einem daraus berechne- ten Kugelhub derselben;
- Figur 2: einen Längsschnitt durch eine vermessene Ventilkappe mit deren Tiefeninnenmaß und
- Figur 3: den Kolben mit Kolbenboden gemäß Figur 1, jedoch mit einer Messkugel in einem Ventilsitz in Messposition ange- ordnet und mit deren Vorstehmaß.

### Ausführliche Beschreibung der Zeichnung

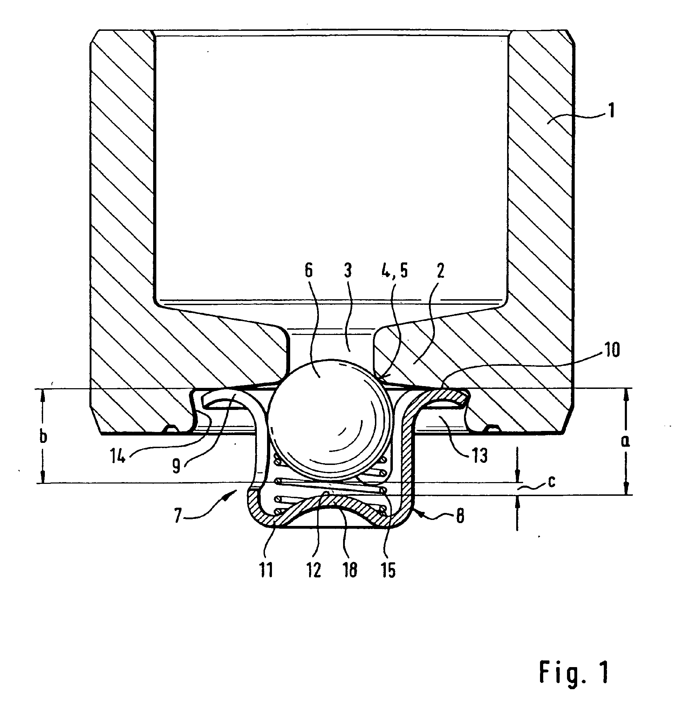

In Figur 1 ist ein Längsschnitt durch ein hydraulisches Ventilspielausgleichselement in Standardausführung dargestellt, mit einem Kolben 1, der einen Kolbenboden 2 mit einer zentralen Bohrung 3 aufweist. Diese besitzt an ihrem außen liegenden Ende 4 einen Ventilsitz 5, der von einer Ventilkugel 6 eines Steuerventils 7 beherrscht wird.

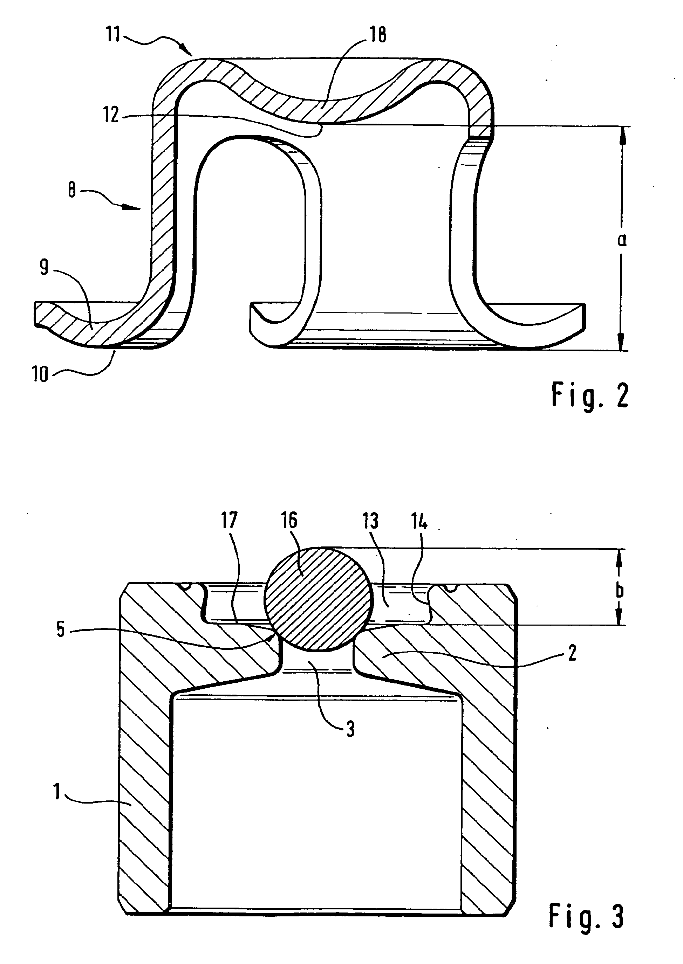

Das Steuerventil 7 besitzt eine Ventilkappe 8, die einen Kappenflansch 9 mit einer Auflagefläche 10 und einen Kappenboden 11 mit einer Nachdrückmulde 18 aufweist, deren Innenfläche als Anschlag 12 für die Ventilkugel 6 dient. Die Auflagefläche 10 liegt in einer Einsenkung 13 des Kolbenbodens 2 auf einem in Figur 3 bezifferten Boden 17 und wird am Rand 14 derselben zentriert. Da der Rand 14 der Einsenkung 13 etwas eingezogen und die Ventilkappe 8 federnd ausgebildet ist, wird dieselbe bei der Montage in die Einsenkung 13 eingeclipst.

Der Anschlag 12 dient der Ventilkugel 6 als Hubbegrenzung und einer Kugelfeder 15 als Führung und Auflage. Dieselbe beaufschlagt bei der hier vorliegenden Standard-Version des Steuerventils 7 die Ventilkugel 6 in Richtung Ventilsitz 5. Die Außenseite des Anschlags 12 ist als Nachdrückmulde 18 ausgebildet.

Ein Tiefeninnenmaß a zwischen der Auflagefläche 10 und dem Anschlag 12 der Ventilkappe 8 und ein Vorstehmaß b der Messkugel 16 gegenüber dem Boden 17 der Einsenkung 13 ergeben einen rechnerischen Kugelhub c als Differenz von a und b.

In Figur 2 ist ein vergrößerter Längsschnitt der Ventilkappe 8 dargestellt, mit dem Kappenflansch 9 und dessen Auflagefläche 10 sowie mit dem Kappenboden 11 und dessen Anschlag 12. Das Tiefeninnenmaß a ist durch den Abstand der Auflagefläche 10 und dem Anschlag 12 der Ventilkappe 8 festgelegt.

Figur 3 zeigt den Kolben 1 mit dem Kolbenboden 2, der die zentrale Bohrung 3 mit dem Ventilsitz 5 aufweist, in dem eine Messkugel 16 liegt. Außerdem ist die Einsenkung 13 mit deren Rand 14 und deren Boden 17 dargestellt, auf den sich das Vorstehmaß b der Messkugel 16 bezieht.

Das erfindungsgemäße Verfahren nach dem Verfahrensanspruch funktioniert folgendermaßen:

Zunächst wird das Tiefeninnenmaß a einer beliebigen Ventilkappe 8 und das Vorstehmaß b einer Messkugel 16 in einem beliebigen Kolben 1 gemessen. Die Differenz der Messwerte a - b ergibt den rechnerischen Kugelhub c. Dieser wird im Regelfall von dem gewünschten Kugelhub abweichen. Die Differenz aus dem rechnerischen Kugelhub c und dem gewünschten Kugelhub bestimmt die Abweichung des Durchmessers der zuzupaarenden Ventilkugel 6 vom Durchmesser der Messkugel 16, um den Sollhub der Ventilkugel 6 zu erreichen.

### Bezugszeichen

- 1: Kolben
- 2: Kolbenboden
- 3: zentrale Bohrung
- 4: außenliegendes Ende der zentralen Bohrung
- 5: Ventilsitz
- 6: Ventilkugel
- 7: Steuerventil
- 8: Ventilkappe
- 9: Kappenflansch
- 10: Auflagefläche des Kappenflansches
- 11: Kappenboden
- 12: Anschlag
- 13: Einsenkung im Kolbenboden
- 14: Rand der Einsenkung
- 15: Kugelfeder
- 16: Messkugel
- 17: Boden der Einsenkung
- 18: Nachdrückmulde
- a: Tiefeninnenmaß der Ventilkappe
- b: Vorstehmaß der Messkugel
- c: rechnerischer Kugelhub

## Patentansprüche

1. Verfahren zum Einstellen des Kugelhubs eines als Ventilkugel (6) ausgebildeten Ventilschließkörpers eines Steuerventils (7) eines hydraulischen Ventilspielausgleichselements, das einen Kolben (1) mit einem Kolbenboden (2) und einer zentralen Bohrung (3) in demselben aufweist, an deren außenliegendem Ende (4) ein Ventilsitz (5) vorgesehen ist, der von der Ventilkugel (6) beherrscht ist, deren Kugelhub durch eine Ventilkappe (8) begrenzt ist, die einen Kappenflansch (9) und einen Kappenboden (11) aufweist, wobei der Kappenflansch (9) mit seiner Auflagefläche (10) auf einem Boden (17) einer Einsenkung (13) des Kolbenbodens (2) aufliegt und ein Anschlag (12) des Kappenbodens (11) der Ventilkugel (6) als Hubbegrenzung dient, **dadurch gekennzeichnet, dass** nach Messen eines Tiefeninnenmaßes (a) der Ventilkappe (8), das von der Auflagefläche (10) des Kappenflansches (9) bis zu dem Anschlag (12) des Kappenbodens (11) reicht und nach Messen eines Vorstehmaßes (b) einer in dem Ventilsitz (5) liegenden Messkugel (16) gegenüber dem Boden (17) der Einsenkung (13), ein rechnerischer Wert des Kugelhubs (c = a - b) bestimmt wird und dass danach eine zugepaarte Ventilkugel (6) mit dem für den gewünschten Kugelhub erforderlichen Kugeldurchmesser aus einer Reihe von Ventilkugeln unterschiedlichen, bekannten Durchmessers ausgewählt und zusammen mit dem vermessenen Kolben (1) und der vermessenen Ventilkappe (8) montiert wird.

## Claims

1. Method of setting the ball travel of a valve-closing body, designed as valve ball (6), of a control valve (7) of a hydraulic valve-lash-adjusting element which has a plunger (1) with a plunger head (2) and a central bore (3) in the same, a valve seat (5) being provided at the outer end (4) of this central bore (3), this valve seat (5) being controlled by a valve ball (6), the ball travel of which is limited by a valve cap (8) which has a cap flange (9) and a cap base (11), the cap flange (9) resting with its bearing surface (10) on a base (17) of a recess (13) of the plunger head (2), and a stop (12) of the cap base (11) serving as a travel limit for the valve ball (6), **characterized in that**, after an internal depth dimension (a) of the valve cap (8) has been measured, this internal depth dimension (a) extending from the bearing surface (10) of the cap flange (9) up to the stop (12) of the cap base (11), and after a projecting dimension (b) of a measuring ball (16), lying in the valve seat (5), relative to the base (17) of the recess (13) has been measured, a calculated value of the ball travel (c = a - c) is determined, and **in that**, after that, a matched valve ball (6) having the ball diameter required for the desired ball travel is selected from a number of valve balls of different, known diameter and is fitted together with the measured plunger (1) and the measured valve cap (8).

## Revendications

1. Procédé d'ajustement de la course de la bille d'un corps de fermeture de soupape, réalisé sous forme de bille de soupape (6), d'une soupape de commande (7) d'un élément hydraulique de compensation du jeu des soupapes, qui présente un piston (1) avec un fond de piston (2) et un alésage central (3) dans celui-ci, un siège de soupape (5) étant prévu sur l'extrémité (4) extérieure de celui-ci, ledit siège étant dominé par la bille de soupape (6), dont la course de bille est limitée par un capuchon de soupape (8), qui présente une bride de capuchon (9) et un fond de capuchon (11), la bride de capuchon (9) reposant avec sa face d'appui (10) sur un fond (17) d'un renfoncement (13) du fond de piston (2) et une butée (12) du fond de capuchon (11) de la bille de soupape (6) servant de limitation de course, **caractérisé en ce qu'**en fonction de la mesure d'une dimension intérieure de profondeur (a) du capuchon de soupape (8), qui s'étend depuis la surface d'appui (10) de la bride de capuchon (9) jusqu'à la butée (12) du fond de capuchon (11) et en fonction de la mesure d'une dimension de projection (b) d'une bille de mesure (16) située dans le siège de soupape (5) par rapport au fond (17) du renfoncement (13), une valeur mathématique dé la course de la bille (c = a - b) est déterminée et qu'ensuite une bille de soupape (6) appariée avec le diamètre de bille requis pour la course de bille souhaitée est sélectionnée à partir d'une série de billes de soupape de diamètre connu différent, et est montée conjointement avec le piston mesuré (1) et le capuchon de soupape mesuré (8).
